(19) Europäisches Patentamt
European Patent Office
Office européen des brevets

(11) EP 2 575 445 B1

(12) **EUROPEAN PATENT SPECIFICATION**

(45) Date of publication and mention of the grant of the patent:
**05.10.2016 Bulletin 2016/40**

(21) Application number: **11720551.8**

(22) Date of filing: **23.05.2011**

(51) Int Cl.:
***A01P 7/00*** *(2006.01)* ***A01N 25/02*** *(2006.01)*
***A01N 25/04*** *(2006.01)* ***A01N 25/30*** *(2006.01)*
***A01N 51/00*** *(2006.01)* ***A01N 47/40*** *(2006.01)*
***A01N 47/06*** *(2006.01)*

(86) International application number:
**PCT/EP2011/058331**

(87) International publication number:
**WO 2011/147766 (01.12.2011 Gazette 2011/48)**

(54) **USE OF OIL BASED SUSPENSION CONCENTRATES FOR REDUCING DRIFT DURING SPRAY APPLICATION**

VERWENDUNG VON ÖLBASIERTEN SUSPENSIONSKONZENTRATEN ZUR DRIFTMINDERUNG BEI SPRÜHVORGÄNGEN

UTILISATION DE SUSPENSIONS CONCENTRÉES À BASE D'HUILE POUR RÉDUIRE LA DÉRIVE LORS DE L'APPLICATION PAR PULVÉRISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2010 US 348994 P**
**27.05.2010 EP 10164022**

(43) Date of publication of application:
**10.04.2013 Bulletin 2013/15**

(73) Proprietor: **Bayer CropScience AG**
**40789 Monheim (DE)**

(72) Inventors:
- **VERMEER, Ronald**
**40789 Monheim (DE)**
- **CHAPPLE, Andrew, Charles**
**40764 Langenfeld (DE)**
- **FRIEßLEBEN, Reinhard**
**51375 Leverkusen (DE)**

(74) Representative: **BIP Patents**
**c/o Bayer Intellectual Property GmbH**
**Alfred-Nobel-Straße 10**
**40789 Monheim am Rhein (DE)**

(56) References cited:
**DE-A1- 10 129 855**
**DE-A1-102005 018 262**
**US-B1- 6 797 673**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to the use of oil based suspension concentrates for reducing drift during spray application. The oil based suspension concentrates are usually diluted with water and can be further diluted with additional additives. The spray liquid so obtained is then sprayed and is especially applicable for spraying using conventional hydraulic nozzles.

Pesticidal active compounds (a.s.), e.g., herbicides, fungicides, insecticides, bactericides, miticides, plant growth regulators, etc., and their formulated products are often sprayed, normally after dilution in an aqueous spray liquid, onto plants and / or their habitat. When applying such spray formulations, a more or less pronounced drifting of the spray solution containing the active substance(s) may be observed, depending on the wind conditions, nozzle type, and other application parameters such as, for example, nozzle pressure, boom height, and tractor speed.

Pesticide spray drift is a major source of concern in relation to the environmental impact of agriculture on natural ecosystems and urban areas. Furthermore, this drift is undesirable because it causes a certain part of the applied agrochemical to be lost as far as the intended application rate of the treated area is concerned, and this drifting material might cause damage to neighboring crops and especially, have effects on the local environment (e.g., surface water, non-target flora and fauna) as well as bystanders and occupants in residential areas.

Various methods are used to prevent the drifting of the spray outside the field borders. The use of natural or artificial windbreaks is well known. However, it has been described that even when such screens are used, drift can cause deposition of the active substances behind such borders (e.g., "Deposition of spray drift behind border structures", M. De Schampheleire et al. Crop Protection 28 (2009) 1061-1075). Another frequently used drift mitigation measure is buffer zones, either off-crop or in-crop. A disadvantage of off-crop buffer zones is that part of the field cannot be sown with a crop, an economic cost to the farmer. A disadvantage of in-crop buffer zones is that part of the crop is not protected adequately, resulting in a lower yield and perhaps resistance development. Clearly, this is something farmers want to prevent.

Next to physically limiting spray drift (e.g., using spray shields), it is also possible to alter the structure of the spray cloud so that less drops are prone to drift - i.e., typically those drops under 120 $\mu$m. This can be done by choosing different types of nozzles, changing the pressure at which the spray cloud is produced, or by changing the properties of the spray liquid itself. Especially changing nozzles and / or nozzle pressure is something farmers do not prefer to do because it is time consuming and is an added cost to crop production. Also, the equipment needed on a sprayer to deal with variable application rates is not common. For these reasons, a more acceptable way to optimise a spray cloud so that it generates less drift is by adjusting the properties of the spray liquid.

The drift of a spray is determined to a great extent by the droplet size distribution of the spray. In particular, the fraction of droplets smaller than 120 micrometers contributes most to drift (e.g., "The importance of droplet size in agricultural spraying", A.J. Hewitt Atomization and Sprays 7 (1997) 235-244). The smaller the droplets, the longer the residence time in the air and the higher the tendency to evaporate and / or to drift rather than deposit within the field borders. The drift effect can be minimized significantly by adding suitable drift control agents to pesticide formulations that increase the size of the droplets in the spray cloud - i.e., shift the droplet spectra towards larger droplets.

Numerous commercial products are available that can be added as a tank mix adjuvant with pesticide formulations during the preparation of the spray liquid. Examples are: Drop Zone™ DC, Pointblank®, Nalco-trol® and Sta-Put® from Helena, and AntiDrift from AmegA Science Inc. These products increase the average droplet size of the spray cloud, by increasing the viscosity of the spray solution. Furthermore, several patents have been published that teach the use of viscosity modifiers to reduce drift (e.g., US 005824797A, CA 1084689A, WO 0026160A, US 006103793A, or WO 0160877A). However, there is a tendency for viscosity modifiers to create extremely large droplets, as well as reducing the fraction below 120 micrometer when atomising liquids through conventional agricultural hydraulic nozzles. This results in a significant lower number of droplets overall, not just fewer droplets that might drift, and consequently reduces the number of opportunities to kill the pest. There is clearly a balance between droplet spectra that are so coarse that drift is near nil but biological efficacy is greatly reduced and exceedingly fine sprays where biological efficacy might be very good but drift problems are prohibitive.

The reason why such additives are still added as tank-mix adjuvant relates to the amount of additive needed to obtain a reliable result. If such an amount of drift reduction additives is included as part of the formulation containing the active compound, the formulation on its own will have an extremely high viscosity, making it very difficult for the farmer to use. It has to be considered that dilution factors of a formulated product (formulation, oil-based suspension concentrate) into the final spray liquid can range from 50 to several 1000.

Although tank-mix adjuvants are commercially available, there is a great demand for single-package solutions (i.e., all components in one container, sometimes known as "in-can") because of the many advantages these in-can products have. The main advantage relates to the security and accuracy in the dosing. For in-can products, the per ha dose is related to the dosing of the active compound, which is in general done accurately by the farmer since this correlates with the efficacy of the spray. However, this may not be true in the use of tank-mix adjuvants. By using an in-can product and applying its label instructions, it is therefore guaranteed that neither the anti-drift adjuvant nor the active compound is applied under-dosed. Furthermore, by using in-can products, the safety of the operator can be improved, since less bottles / products have to be handled. There is also the advantage of less packaging material, reducing the degree of indirect pollution / waste disposal.

When searching for solutions to overcome the drift problem, it has to be taken into account that the biological performance of the resulting application is not reduced. The use of formulation (both in-can and tank-mix) that increase the spray droplet size may reduce the efficacy to some extent, mainly because of reduced cover (e.g., "Biological efficacy of herbicides and fungicides applied with low-drift and twin-fluid nozzles" P.K.Jensen et al. Crop Protection 20 (2001)57-64). Retention of larger droplets on leaf surfaces will be reduced as they run-off or bounce or shatter and redistribute. Fewer larger droplets adhering to the leaf surface will reduce overall biological efficacy. Larger drops normally contain many times the dose required for a biological effect, thus wasting opportunities for pest control. Furthermore, for crops where the spray cloud has to penetrate into the canopy of the crop, very large droplets can pass directly through canopies, or bounce off leaves, or shatter and redistribute to soil. All these effects of applying active compound in large droplets can reduce efficacy.

Based on the described market demands - good efficacy but limited drift - the problem to be solved with the present invention was to deliver formulations, preferably in-can formulations that reduce drift without affecting the biological performance.

Oil based suspension concentrates with improved biological performance have been described before (e.g., WO2003000053, WO2005084441, WO2006111279, WO2008031512, WO2009106247). Formulations produced according to these patents show a synergistic efficacy as compared to closely related products as well as to straight products of the same active compound in combination with a tank- mix adjuvant. These products contain as well as the active compound, oil, high concentrations of surfactants, but no thickening agent. US6797673 discloses a drift control agent to be added to agricultural agents to be sprayed to crops, in particular glyphosate.

The composition comprises lecithin (40-60% by weight), a methyl ester (20-30% by weight), like a methylated seed oil and a non-ionic surfactant like TomadolTM (20-30% by weight). Lecithin is a known agricultural penetrant. TomadolTM 1-5 is a C-11 alcohol that is ethoxylated with 4-5 moles of ethylenoxy- groups and therefore it is a known non-ionic surfactant.

Surprisingly, it was found that the use of oil based suspension concentrates containing

a) at least one agrochemical active compound which is solid at room temperature,

b) at least one penetration enhancer,

c) at least one vegetable oil or mineral oil or paraffin oil,

d) at least one non-ionic surfactant or dispersing agent and / or at least one anionic surfactant or dispersing agent and

e) optionally one or more other additives,

significantly reduces the drift (of the sprayed liquid containing the oil based suspension concentrate) during spray application. This is probably due to a significant increase of the droplet size of the spray clouds produced during spray application. This is even more surprising in the preferred case wherein the oil-based suspension concentrates do not contain additives that increase the viscosity of the spray liquid.

The invention is directed to the use of oil based suspension concentrates containing

a) 5 - 30 wt.-% of at least one agrochemical active compound which is solid at room temperature, based on the weight of the suspension concentrate, wherein the at least one agrochemical active compound a) is selected from the group of neonicotinyls or ketoenols,

b) 10 - 55 wt.-% of at least one penetration enhancer, based on the weight of the suspension concentrate,

c) 15 - 55 wt.-% of at least one vegetable oil or mineral oil or paraffin oil, based on the weight of the suspension concentrate,

d) 2.5 - 30 wt.-% of at least one non-ionic surfactant or dispersing agent and / or at least one anionic surfactant or dispersing agent, based on the weight of the suspension concentrate, and

e) optionally 0 - 25 wt.-% of one or more other additives

for the reduction of the drift of a spray liquid containing the oil-based suspension concentrate during spray application.

Preferably, the spray liquid contains at least 0.000001 - 10 wt.-%, particularly preferred 0.00005 - 2.5 wt.-%, based on the weight of the spray liquid, of the oil-based suspension concentrates and may also contain additives.

Preferably, the oil-based suspension concentrate contains 0.00001 - 1.0 wt.-%, particularly preferred 0.00005 - 0.5 wt.-%, based on the weight of the oil-based suspension concentrate, water.

Preferably the oil-based suspension concentrates used according to the invention do not contain additives that increase the viscosity of the spray liquid. This means that in this preferred case the oil-based suspension concentrates used according to the invention do not contain thickeners. More preferred, the oil-based suspension concentrates used according to the invention do not contain thickeners that affect the elongational viscosity, such as poly(meth)acrylates, Guar gum, polysaccharide, or polyvinyl based polymers, nor thickeners based on (modified) clays like bentonite, smectite, montmirollonite or attapulgite.

It has to be indicated as extremely surprising that the use of the oil based suspension concentrates according to the invention show a shift of the droplet size spectra to larger drops although the formulations do not contain any additives that can increase the viscosity of their spray liquids.

Furthermore, it is surprising that the use of these oil based suspension concentrates resulted in a significant lower drift of the spray liquid, both on the ground as well as 1.5 meter in the air. It is also unexpected that they exhibit at the same time excellent biological performance, although the overall droplet spectra of the spray liquids have been shifted to larger droplets.

Furthermore, it is surprising that a formulation containing high amounts of surfactant and penetration enhancer (of e.g., 30 to 40 wt.-% taken together) still shows a significant drift reduction. Here it has to be noted that the penetration enhancer under b) and the optional emulsifier under e) may also act as surfactants.

It has been discussed in literature that oils and the presence of emulsion droplets could affect the sheet breakup mechanism and thus the droplet size distribution (Hermansky C.G. and Krause G.F., Proc, ISAA 4th international conference (1997) pp. 20-26; Hewitt A.J., Environmentalist 28 (2008) pp. 25-30). The mechanism explaining these interactions relates to the fact that these oil emulsion droplets are not wettable and therefore accumulate at the air water interface creating holes and consequently influence the breakup process. The addition of a surfactant, however, increases the wettability of the oil emulsion droplets and reduces or even extinguishes this effect (Butler Ellis M.C., Bradley et al., Atom. And Sprays 9 (1999) pp 385-397). Furthermore, it has been shown that the addition of most surfactants that lower the dynamic surface tension do not result in an increase of the average droplet size (Spanoghe P., et al., "The influence of dynamic surface tension on atomization and retention of agrochemical active compounds" Proc. 5th World surfactant congress, Cesio, Committee European des Agents de surface et leurs intermediares organiques, 2 (2000) pp. 899-907).

Combining these findings, the person skilled in the art could not expect with a reasonable degree of success that the use of the oil based suspension concentrates for the production of spray liquids affect the drift behaviour of the spray liquids bearing in mind their high surfactant loading.

In a preferred embodiment of the invention oil-based suspension concentrates are containing

a) 5 - 30 wt.-%, more preferably 10 - 25 wt.-%, of at least one agrochemical active compound which is solid at room temperature, based on the weight of the suspension concentrate,
b) 10 - 55 wt.-%, more preferably 15- 40 wt.-%, of at least one penetration enhancer, based on the weight of the suspension concentrate,
c) 15 - 55 wt.-%, more preferably 20 - 50 wt.-%, of at least one vegetable oil or mineral oil or paraffin oil, based on the weight of the suspension concentrate,
d) 2.5 - 30 wt.-%, more preferably 5 - 25 wt.-%, of at least one non-ionic surfactant or dispersing agent and / or at least one anionic surfactant or dispersing agent, based on the weight of the suspension concentrate, and
e) optionally 0 - 25 wt.-%, more preferably 0 - 20 wt.-%, of one or more other additives.

In particular, it is surprising that even when these oil-based suspension concentrates having a typical content of surfactant and penetration enhancer [b) + d) + optional the emulsifiers under e] of between 20 - 50 wt.-% taken together are used according to the invention, still a significant drift reduction is obtained. This is evident from the examples.

The at least one agrochemical active compound a) is selected from the group of neonicotinyls or ketoenols. Most preferably the at least one agrochemical active compound is imidacloprid, thiacloprid, and/or spirotetramat. Also mixtures of active compounds can be used. Preferred mixtures contain imidacloprid and / or thiacloprid and / or spirotetramat.

In a preferred embodiment of the invention the at least one penetration enhancer b) is selected from the group of alkanol alkoxylates of the formula

$$R\text{-}O\text{-}(\text{-}AO)_m\text{-}R' \qquad (I)$$

in which

R represents straight-chain or branched alkyl having 4 to 20 carbon atoms,
R' represents H, Methyl, Ethyl, n-Propyl, i-Propyl, n-Butyl, i-Butyl, t-Butyl, n-Pentyl or n-Hexyl,
AO represents an ethylene oxide radical, a propylene oxide radical, a butylene oxide radical, or mixtures of ethylene oxide and propylene oxide radicals or butylene oxide radicals and
m represents numbers from 2 to 30.

A particularly preferred group of penetration promoters are alkanol alkoxylates of the formula

$$R\text{-}O\text{-}(\text{-}EO\text{-})_n\text{-}R' \qquad (Ia)$$

in which

R has the meaning indicated above,
R' has the meaning indicated above,
EO represents $-CH_2-CH_2-O-$ and
n represents numbers from 2 to 20.

A further particularly preferred group of penetration promoters are alkanol alkoxylates of the formula

$$R\text{-}O\text{-}(\text{-}EO\text{-})_p\text{-}(\text{-}PO\text{-})_q\text{-}R' \qquad (Ib)$$

in which

R has the meaning indicated above,
R' has the meaning indicated above,
EO represents $-CH_2-CH_2-O-$,
PO represents

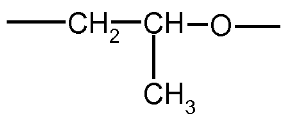
,

p represents numbers from 1 to 10 and
q represents numbers from 1 to 10.

A further particularly preferred group of penetration promoters are alkanol alkoxylates of the formula

$$R\text{-}O\text{-}(\text{- }PO\text{-})_r\text{-}(EO\text{-})_s\text{-}R' \qquad (Ic)$$

in which

R has the meaning indicated above,
R' has the meaning indicated above,
EO represents $-CH_2-CH_2-O-$,

PO represents

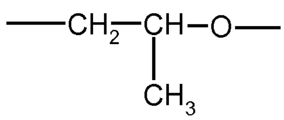
,

r represents numbers from 1 to 10 and
s represents numbers from 1 to 10.

A further particularly preferred group of penetration promoters are alkanol alkoxylates of the formula

$$CH_3\text{-}(CH_2)_t\text{-}CH_2\text{-}O\text{-}(\text{-}CH_2\text{-}CH_2\text{-}O\text{-})_u\text{-}R' \qquad \text{(Id)}$$

in which

t represents numbers from 8 to 13 and

u represents numbers from 6 to 17 .

In the formulae indicated beforehand

R preferably represents butyl, i-butyl, n-pentyl, i-pentyl, neopentyl, n-hexyl, i-hexyl, n-octyl, i-octyl, 2-ethyl-hexyl, nonyl, i-nonyl, decyl, n-dodecyl, i-dodecyl, lauryl, myristyl, i-tridecyl, trimethyl-nonyl, palmityl, stearyl or eicosyl.

R preferably represents H or Methyl,

An example of an alkanol alkoxylate of the formula (Ic) which may be mentioned is 2-ethyl-hexyl alkoxylate of the formula

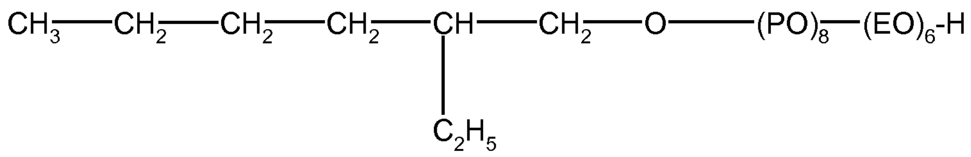

(Ic-1)

in which

EO represents $-CH_2-CH_2-O-$,

PO represents

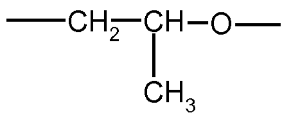

and

the numbers 8 and 6 are average values.

Particularly preferred alkanol alkoxylates of the formula (Id) are compounds of this formula in which

t represents numbers from 9 to 12 and

u represents numbers from 7 to 9.

The above formulae give a general definition of the alkanol alkoxylates. These substances are mixtures of substances of the type indicated having different chain lengths. For the indices, therefore, average values are calculated which can also differ from integers.

By way of example, an alkanol alkoxylate of the formula (Id) may be mentioned, in which

t represents the average value 10.5 and

u represents the average value 8.4.

This alkanol alkoxylate is commercially available and sold under the tradename Emulsifier HOT 5902 (Tanatex®).

The alkanol alkoxylates of the formulae indicated are known or can be prepared by known methods (cf. WO 98-35 553, WO 00-35 278 and EP-A 0 681 865).

The oil-based suspension concentrate used according to the invention contains at least one vegetable or mineral or paraffin oil c). The term at least one vegetable or mineral or paraffin oil means at least one oil selected from the group consisting of vegetable oil, mineral oil and paraffin oil.

Suitable vegetable oils are generally known and commercially available. The term vegetable oils is to be understood as including, for example, oils from oleagineous plant species, such as soya bean oil, rapeseed oil, maize germ oil, maize kernel oil, sunflower oil, cottonseed oil, linseed oil, coconut oil, palm oil, thistle oil, walnut oil, arachis oil, olive oil or castor oil, colza oil, in particular soya bean oil, rapeseed oil, maize germ oil or sunflower oil and mixtures thereof. The vegetable oils (triglycerides) are preferably esters of $C_{10}$-$C_{22}$-, preferably $C_{12}$-$C_{20}$-, fatty acids of glycerol. The $C_{10}$-$C_{22}$-fatty acid esters of glycerol are, for example, esters of unsaturated or saturated $C_{12}$-$C_{20}$-fatty acids, in particular those having an even number of carbon atoms, for example erucic acid, lauric acid, palmitic acid, and in particular $C_{18}$-fatty acids, such as stearic acid, oleic acid, linoleic acid or linolenic acid.

Suitable mineral oils are various commercially available distillate fractions of mineral oil (petroleum). Preference is given to mixtures of open-chain $C_{14}$-$C_{30}$-hydrocarbons, cyclic hydrocarbons (naphthenes) and aromatic hydrocarbons. The hydrocarbons can be either straight-chain or branched. Particular preference is given to mixtures having an aromatic portion of less than 8% by weight. Very particular preference is given to mixtures having an aromatic portion of less than 4% by weight.

Suitable paraffin oils are straight-chain and branched $C_{14}$-$C_{30}$-hydrocarbons. Paraffin oils are also known as base oil or white oil and are commercially available, for example, as Bayol® 85 (Exxon Mobil, Machelen, Belgium), Marcol® 82 (Exxon Mobil, Machelen, Belgium), BAR 0020 (RA.M.oil S.p.A., Naples, Italy), Pionier 0032-20 (Hansen & Rosenthal KG, Hamburg, Germany) or, for example, Kristol M14 (Carless, Surrey, England).

The oil-based suspension concentrates according to the invention contain at least one non-ionic surfactant or dispersing aid and/or at least one anionic surfactant or dispersing aid d).

Suitable non-ionic surfactants or dispersing aids are all substances of this type which can customarily be employed in agrochemical agents. Preferably, polyethylene oxide- polypropylene oxide block copolymers, polyethylene glycol ethers of linear alcohols, reaction products of fatty acids with ethylene oxide and/or propylene oxide, furthermore polyvinyl alcohol, polyvinylpyrrolidone, copolymers of polyvinyl alcohol and polyvinylpyrrolidone, and copolymers of (meth)acrylic acid and (meth)-acrylic acid esters, furthermore alkyl ethoxylates and alkylaryl ethoxylates, which can be optionally phosphated and optionally neutralized with bases, where sorbitol ethoxylates may be mentioned by way of example, and polyoxyalkylenamine derivatives are employed.

Possible anionic surfactants are all substances of this type which can customarily be employed in agrochemical agents. Alkali metal and alkaline earth metal salts of alkylsulphonic acids or alkylarylsulphonic acids are preferred.

A further preferred group of anionic surfactants or dispersing aids are salts of polystyrenesulphonic acids, salts of polyvinylsulphonic acids, salts of naphthalenesulphonic acid-formaldehyde condensation products, salts of condensation products of naphthalenesulphonic acid, phenolsulphonic acid and formaldehyde, and salts of lignosulphonic acid, which are not very soluble in vegetable oil.

Suitable additives e) which can be contained in the formulations according to the invention are emulsifiers, antifoam agents, preservatives, antioxidants, colourants and inert filling materials.

Preferred emulsifiers are ethoxylated nonylphenols, reaction products of alkylphenols with ethylene oxide and/or propylene oxide, ethoxylated arylalkylphenols, furthermore ethoxylated and propoxylated arylalkylphenols, and sulphated or phosphated arylalkyl ethoxylates or -ethoxy-propoxylates, where sorbitan derivatives, such as polyethylene oxide-sorbitan fatty acid esters and sorbitan fatty acid esters, may be mentioned by way of example.

Suitable antifoam substances are all substances which can customarily be employed in agrochemical agents for this purpose. Silicone oils and magnesium stearate are preferred.

Possible preservatives are all substances which can customarily be employed in agrochemical agents for this purpose. Examples which may be mentioned are Preventol® (Lanxess®) and Proxel®.

Suitable antioxidants are all substances which can customarily be employed in agrochemical agents for this purpose. Butylhydroxytoluene is preferred.

Possible colourants are all substances which can customarily be employed in agrochemical agents for this purpose. Titanium dioxide, carbon black, zinc oxide and blue pigments, and Permanent Red FGR may be mentioned by way of example.

Suitable inert filling materials are all substances which can customarily be employed in agrochemical agents for this purpose, and which do not function as thickening agents. Inorganic particles, such as carbonates, silicates and oxides and also organic substances, such as ureaformaldehyde condensates, are preferred. Kaolin, rutile, silica ("highly disperse silicic acid"), silica gels, and natural and synthetic silicates, moreover talc, may be mentioned by way of example.

The oil-based suspension concentrates used according to the invention may be prepared in such a manner that the components are mixed with one another in the desired ratios. The order in which the constituents are combined

with one another is freely chooseable. The solid components are expediently employed in the finely ground state. However, it is also possible to subject the suspension which is formed after combining the components first to coarse milling and then to fine milling, so that the mean particle size is below 20 μm. Preferred suspension concentrates are those in which the solid particles have a mean particle size of between 1 and 10 μm.

The oil-based suspension concentrates used according to the invention take the form of formulations which remain stable even following prolonged storage at elevated temperatures or in the cold since no crystal growth is observed. They can be converted into homogeneous spray mixtures by dilution with water. These spray mixtures are applied by spraying.

The application rate of the oil-based suspension concentrates used according to the invention can be varied within a substantial range. This depends on the agrochemical active substances in question and on their content in the formulations and in the spray liquids.

With the aid of the oil-based suspension concentrates used according to the invention, it is possible to apply agrochemical active substances in a particularly advantageous manner to plants and/or their environment.

The formulations used according to the invention can be used to treat all plants and plant parts. In the present context, plants are understood as meaning all plants and plant populations, such as desired and undesired wild plants or crop plants (including naturally occurring crop plants). Crop plants can take the form of plants which can be obtained by conventional breeding and optimization methods or by biotechnological and recombinant methods or by combinations of these methods, including the transgenic plants and including the plant varieties capable or not of being protected by Plant Breeders' Rights. Plant parts are understood as meaning all aerial and subterranean parts and organs of the plants such as shoot, leaf, flower and root, examples which may be mentioned being leaves, needles, stalks, stems, flowers, fruiting bodies, fruits and seeds, and also roots, tubers and rhizomes. The plant parts also include harvested material and vegetative and generative propagation material, for example cuttings, tubers, rhizomes, slips and seeds.

What must be emphasized here is the especially advantageous effect of the compositions according to the invention regarding the use in cereal plants such as, for example, wheat, oats, barley, spelt, triticale and rye, but also in maize, millet and sorghum, rice, sugarcane, soybeans, sunflowers, potatoes, cotton, oilseed rape, canola, tobacco, sugar beet, fodder beet, asparagus, hops and fruit plants (comprising pome fruit such as, for example, apples and pears, stone fruit such as, for example, peaches, nectarines, cherries, plums and apricots, citrus fruits such as, for example, oranges, grapefruits, limes, lemons, cumquats, tangerines and satsumas, nuts such as, for example, pistachios, almonds, walnuts and pecan nuts, tropical fruits such as, for example, mango, papaya, pineapple, dates and bananas, and grapes) and vegetables (comprising leafy vegetables such as, for example, endives, corn salad, Florence fennel, lettuce, cos lettuce, Swiss chard, spinach and chicory, cabbages such as, for example, cauliflower, broccoli, Chinese leaves, borecole (curly kale, feathered cabbage), kohlrabi, Brussels sprouts, red cabbage, white cabbage and savoy cabbage, fruit vegetables such as, for example, aubergines, cucumbers, capsicums, table pumpkins, tomatoes, courgettes and sweet corn, root vegetables such as, for example, celeriac, early turnips, carrots, including yellow cultivars, radish, including small radish, beetroot, scorzonera and celery, pulses such as, for example, beans and peas, and bulb vegetables such as, for example, leeks and table onions).

The treatment according to the invention of the plants and plant parts with the formulations used according to the invention is carried out directly or by acting on their environment, habitat or storage area in accordance with the customary treatment methods by spraying on and, in the case of propagation materials, in particular in the case of seeds, furthermore by applying one or more coats.

The invention is illustrated by the examples which follow.

**Examples:**

**Example 1: Measurement of droplet size and velocity distributions of spray solutions**

Measurements of the droplet size and velocity distributions in the spray were made using a commercially available spray analyser, the Oxford Lasers Ltd "Visisizer", operating in the purpose-built chamber of the Silsoe site managed by Silsoe Spray Applications Unit. Measurements were made at a distance of 350 mm below the nozzle orifice. To ensure that the whole of the spray pattern was sampled, nozzles were mounted on a computer controlled x-y transporter that was programmed to move the nozzle at a speed of 20 mm/s and with a scan step of 20 mm. Nozzles were fed from pressurised canisters, with the air pressure used to control the spraying pressure which was measured with an electronic transducer mounted immediately upstream of the nozzle. The temperature of the spray liquid and the surrounding air were also measured close to the nozzle mounting and the temperature of the water used for mixing the spray liquids was manipulated to be within 3°C of room temperature prior to any formulations being added to the water.

Spray liquids within the pressurised canisters were not agitated. Liquids were thoroughly agitated as part of the initial mixing process and the pressurised canister then positioned on a computer-monitored weighing platform such that the flow rate to the nozzles could be monitored.

All measurements were made with the "Visisizer" instrument operating in velocity mode. In this mode, images are taken in pairs with a short duration (20.4 μs) between image frames. Droplet images are matched on the two frames and the movement from one frame to the other used to calculate droplet velocities. It should be noted that the droplet imaging rate is reduced when the instrument is operating in velocity mode but for most measurement runs, well in excess of 2000 droplets were sampled. All measurements were replicated at least twice to give a large numerical droplet count on which the analysis of the results could be based.

Results from the measurements were analysed to give:

(i) the volume median diameter $D_{v50}$ (vmd) in the spray;

(ii) the percentage of spray volume in droplets <100 μm in diameter - as an indicator of the likely drift risk associated with the spray;

(iii) the mean liquid velocity of the droplet classes in the spray.

The formulations all contain imidacloprid as the active compound and are all commercially available under the trade names Confidor® or Admire® (Bayer Crop Science AG). Except for the OD (oil dispersion), these formulations do not contain a vegetable or mineral or paraffin oil, in combination with high amounts of surfactants.

All measurements were made at two concentrations; the higher concentration with 100 g of active ingredient per 300 L of water and the lower concentration with 30 g of active ingredient per 300 L of water.

Two references were used for comparison. Water only, and a 0.1% solution of Agral® from Syngenta (a non-ionic spray additive designed for use with fungicides, insecticides and herbicides to increase wetting and improve spray coverage).

Four agricultural spray nozzles were used, namely:

- a conventional "03" size of flat fan nozzle (BCPC reference: Lurmark 03F110) having a 110° spray angle and operating at a pressure of 3.0 bar to give a nominal flow rate of 1.2 L/min;
- an extended range ("XR" - TeeJet) "03" size flat fan nozzle with a 110° spray angle, a pressure of 3.0 bar and a nominal flow rate of 1.2 L/min;
- a pre-orifice ("Drift Guard" - "DG"- TeeJet) "03" size 110° flat fan nozzle at 3.0 bar pressure and a nominal flow rate of 1.2 L/min;
- an air-induction nozzle ("AI"-TeeJet) "03" size 110° flat fan nozzle at 3.0 bar pressure and a nominal flow rate of 1.2 L/min.

| | | TeeJet XR11003VS | | Lurmark 03F110 | | TeeJet DG11003VS | | TeeJet AI11003VS | |
|---|---|---|---|---|---|---|---|---|---|
| | | %vol < 100 μM | D50 VMD | % vol < 100 μm | D50 VMD | % vol < 100 μm | D50 VMD | % vol < 100 μm | D50 VMD |
| water only | water | 11,3 | 204,1 | 13,2 | 185,2 | 6.0 | 262,5 | 1,6 | 563,7 |
| 0.1% Agral | 0.1% Agral | 15,4 | 185,8 | 14,7 | 175,5 | 7,3 | 246,4 | 1,1 | 522,2 |
| 0.05% SL (200g/l) | SL low | 10,7 | 205,2 | 11,8 | 186,8 | 5,5 | 262,4 | 1,2 | 586,4 |
| 0.17% SL (200g/l) | SL high | 12,1 | 202,7 | 12,9 | 187,4 | 6,8 | 259,3 | 1,1 | 548,4 |
| 0.05% OD (200g/l) | OD low | 7,9 | 225,1 | 9,2 | 208,1 | 2,2 | 321,8 | 0,7 | 558,3 |
| 0.17% OD (200g/l) | OD high | 6.0 | 243,3 | 7.0 | 222,3 | 2,8 | 316,2 | 0,8 | 533.0 |
| 0.028% SC | | | | | | | | | |

(continued)

| | | TeeJet XR11003VS | | Lurmark 03F110 | | TeeJet DG11003VS | | TeeJet AI11003VS | |
|---|---|---|---|---|---|---|---|---|---|
| | | %vol < 100 µM | D50 VMD | % vol < 100 µm | D50 VMD | % vol < 100 µm | D50 VMD | % vol < 100 µm | D50 VMD |
| (350g/l) | SC low | 11,5 | 203,2 | 13,2 | 184,4 | 6,9 | 255,9 | 1,7 | 551,3 |
| 0.095% SC (350g/l) | SC high | 12,8 | 197,5 | 14,8 | 179,6 | | 257,9 | 1,5 | 558,7 |
| 0.014g/L WG (70%l) | WG low | 13,6 | 190,5 | 14,8 | 180,9 | 7,2 | 252,8 | 1,7 | 513,1 |
| 0.048g/L WG (70%l) | WG high | 11,6 | 201,6 | 11.0 | 195,2 | 5,4 | 267,2 | 2,1 | 523,1 |

Remarks: volume median diameter (vmd) in µm; SL means soluble concentrate; OD means oil dispersion (oil-based suspension concentrate); SC means suspension concentrate; WG means water dispersable granules; the SL, SC and WG formulations do not contain a vegetable or mineral or paraffin oil (component c) and, thus, can not be used according to the invention; the OD (oil-based suspension concentrate) formulations comprise components a) to d) as defined in claim 1 and, thus, can be used according to the invention.

The data show that the use of an oil based suspension concentrate (OD) according to the invention containing the components a) to d) as defined in claim 1 leads to a strong reduction in the fraction of particles smaller than 100 µm and an increase in the VMD, independent of the nozzle type compared to both references.

This is not observed with the corresponding SL formulation (SL = soluble concentrate), SC formulation (SC = suspension concentrate) and WG formulation (WG = wetable granule), where in comparison with water, the fraction of particles smaller than 100 µm even increases and the VMD decreases. In these further formulations, no vegetable or mineral or paraffin oil is present and which, thus, can not be used according to the invention.

**Example 2: Measurement of droplet size**

Experiments were carried out with a Malvern Spraytec apparatus, positioned 330 mm below the nozzle outlet orifice. The Spraytec was equipped with a 750 mm lens systems which covers a particle size range from 0,1 - 2500 µm. Malvern Software uses Frauenhofer approximation to calculate the volume-based parameter: size distribution Dv(50) and the percentage of spray droplets under 100 µm. Droplets smaller than 15 µm are not expected to be formed by conventional industrial nozzles, so that the Frauenhofer theory is appropriate.

An extended range "TeeJet" flat fan nozzle XR11003 with a 110° spray angle and a flow rate of 1,18 L/min was chosen for the experiments, operated at 3 bar pressure and room temperature.

The nozzle was moved with a constant velocity of 20 cm/s from the offsite position towards the laser beam, where it was stopped in the middle of the elliptical spraying pattern (i.e., directly above the laser) and then moved back to the initial point.

All formulations used are commercially available under the trade names Confidor or Admire (Imidacloprid), Movento (Spirotetramat), Calypso and Biscaya (Thiacloprid) and Belt and Tihan (Flubendiamid) (Bayer Crop Science AG). Except for the OD, these formulations do not contain a vegetable or mineral or paraffin oil, in combination with high amounts of surfactants.

The formulations were diluted to a final concentration of 0,1g/L of active ingredient in Cipac C[1] water before spraying.

| | **TeeJet XR11003VS** | |
|---|---|---|
| | % vol | D50 |
| **Spray solution based on** | < 100um | VMD |
| Cipac C water only | 13,0 | 189,6 |
| Imidacloprid SC 350 | 11,4 | 213,0 |
| Imidacloprid OD 200 | 8,2 | 219,5 |
| Spirotetramat SC 240 | 13,4 | 191,0 |

(continued)

| | TeeJet XR11003VS | |
|---|---|---|
| | % vol | D50 |
| Spirotetramat OD 150 | 9,2 | 205,9 |
| Thiacloprid SC 480 | 14,0 | 174,7 |
| Thiacloprid OD 240 | 9,7 | 199,4 |
| Flubendiamid SC 480 | 13,9 | 184,8 |
| Flubendiamid + Spirotetramat OD 175 | 13,0 | 204,8 |

[1] A standarised "hard" water

Remarks: volume median diameter (VMD) in μm; OD means oil dispersion (oil-based suspension concentrate); SC means suspension concentrate; the SC formulations do not contain a vegetable or mineral or paraffin oil (component c) and, thus, can not be used according to the invention; the OD (oil-based suspension concentrate) formulations comprise components a) to d) as defined in claim 1 and, thus, can be used according to the invention.

The data show that the use of an oil based suspension concentrate (OD) according to the invention containing the components a) to d) as defined in claim 1 leads to a strong reduction in the fraction of particles smaller than 100 μm and an increase in the VMD, of the spray liquid containing the oil-based suspension concentrate during spray application compared with the reference water and the corresponding SC formulations (SC= suspension concentrate) of the same active ingredient wherein no vegetable or mineral or paraffin oil is present and which, thus, can not be used according to the invention.

**Example 3: Model and scenario data**

**Model**

The Silsoe arable crop drift model (Miller PCH and Hadfield DJ, A simulation model of spray drift from hydraulic nozzles. J. Agric. Eng. Res. 42: 135-147 (1989)) was used to simulate downwind drift from a single flat fan nozzle, spraying stationary at the field edge. Experimental data - the droplet size frequency distributions - from Example 1 were used as input for the calculations.

**Parameterisation**

The model was parameterised as described in Table 1.

Nozzles were differentiated in the model according to their sheet velocity - 20 m $s^{-1}$ for the conventional nozzles, 15 m $s^{-1}$ for the pre-orifice, and 10 m $s^{-1}$ for the air-inclusion nozzle. The model output gives the drift for various drop size classes and these are combined along with the proportions and numbers of drops in each size class to give a picture of the drift from the entire spray produced by the nozzle. The drift from the single nozzle thus modelled is combined with 40 other nozzles thus making up a 20 m boom, thus giving a reasonable representation of the application during a standard drift trial.

Table 1: Parameters assessed during calibration.

| *Atomisation* | *Model parameters* | | | |
|---|---|---|---|---|
| Nozzle type: | Reference | XR | DG | AI |
| Sheet velocity (m $s^{-1}$) | 20 | 20 | 15 | 10 |
| Coherent length (m) | 0.02 | | | |
| Entrained air parameter | 0.096 | | | |
| Nozzle height (m) | 0.5 | | | |
| Nozzle rotation (°) | 0 | | | |
| Wind speed profile: | | | | |
| $Z_0$ [Roughness length] (m) | 0.02 | | | |
| Crop height (m) | 0.05 | | | |
| do [Displacement height] (m) | 0.63 | | | |
| Crop type | short grass mat | | | |

(continued)

| Weather conditions: | |
|---|---|
| Temperature °C | 20 |
| Wet bulb depression °C | 5 |
| Wind speed m $s^{-1}$ | 2.68 (at 10 m) |
| Friction velocity | 0.1164 |

Average % change in drift (simple average over distances given in results) for four 11003 flat fan nozzles, 4 m/s wind speed.

| *Dist downwind* | *Water* | *Agral 0.1%* | *OD 0.05%* | *OD 0.17%* | *SC 0.028%* | *SC 0.095%* | *SL 0.05%* | *SL 0.17%* | *WG 0.014%* | *WG 0.048%* |
|---|---|---|---|---|---|---|---|---|---|---|
| Reference | 2.2 | Reference spray liquid | 53.6 | 69.9 | 1.9 | 4.7 | 18.9 | 5.8 | -4.6 | 27.2 |
| TeeJet DG | 29.9 | | 81.7 | 76.3 | 9.6 | 15.2 | 29.1 | 26.8 | 28.1 | 25.1 |
| Teejet AI | 29.3 | | 80.2 | 74.9 | 9.5 | 15.1 | 28.1 | 26.6 | 27.6 | 24.7 |
| TeeJet XR | 29.8 | | 56.9 | 71.9 | 26.9 | 15.1 | 29.2 | 17.5 | 8.7 | 15.7 |

Drift reduction relative to "water +Agral" at various distances downwind, for a TeeJet 11003 DG nozzle (50% drift reduction), atomising various imidacloprid formulations at 3.0 bar, at 20°C and 60%RH - 2 m $s^{-1}$ wind speed.

| *Dist downwind* | *Water* | *Agral 0.1%* | *OD 0.05%* | *OD 0.17%* | *SC 0.028%* | *SC 0.095%* | *SL 0.05%* | *SL 0.17%* | *WG 0.014%* | *WG 0.048%* |
|---|---|---|---|---|---|---|---|---|---|---|
| 1 | 30.3 | Reference spray liquid | 81.3 | 76.0 | 8.8 | 14.4 | 29.3 | 27.2 | 27.8 | 25.1 |
| 2 | 30.5 | | 83.8 | 78.0 | 11.7 | 16.4 | 29.8 | 27.3 | 28.6 | 26.3 |
| 3 | 30.1 | | 85.0 | 79.2 | 12.5 | 17.3 | 29.8 | 26.6 | 28.7 | 26.4 |
| 4 | 29.8 | | 85.6 | 79.9 | 12.7 | 17.9 | 29.8 | 25.9 | 28.5 | 26.3 |
| 5 | 29.6 | | 86.1 | 80.3 | 12.7 | 18.2 | 29.7 | 25.4 | 28.2 | 26.1 |
| 10 | 29.3 | | 87.0 | 81.4 | 12.5 | 18.8 | 29.5 | 24.1 | 27.4 | 25.4 |
| 15 | 29.1 | | 87.4 | 81.8 | 12.1 | 18.8 | 29.2 | 23.7 | 26.8 | 24.9 |
| 20 | 28.8 | | 87.6 | 82.2 | 11.8 | 18.7 | 28.9 | 23.4 | 26.5 | 24.6 |

Remarks: SL means soluble concentrate; OD means oil dispersion (oil-based suspension concentrate); SC means suspension concentrate; WG means water dispersable granules; the SL, SC and WG formulations do not contain a vegetable or mineral or paraffin oil (component c) and, thus, can not be used according to the invention; the OD (oil-based suspension concentrate) formulations comprise components a) to d) as defined in claim 1 and, thus, can be used according to the invention.

The results show that for the OD formulation, the drift reduction in comparison to the reference spray is more than 70 %. In contrast thereto for water alone and for the formulations which do not comprise a vegetable or mineral or paraffin oil (SC, SL, WG), the drift reduction in comparison to the reference spray is present, however under all conditions less than 30%.

**Example 4: Drift field trial**

**Product formulation:**

Imidacloprid OD 200 and SL 200.

Both formulations used are all commercially available under the trade name Confidor (Bayer Crop Science AG). Except for the OD, the SL formulation does not contain a vegetable or mineral or paraffin oil, in combination with high amounts of surfactants.

**Dosage:**

100 g a.i. /ha in 200 L/ha water (a.i. means active ingredient = active compound)

**Equipment, technical data:**

1 wheel plot sprayer, equipped with 2,5m spray boom
5 nozzles (XR 110 03), nozzle spacing 50 cm
1,2 L/min./nozzle at 3,0 bar pressure
7,2 km/h speed
0,5 m boom height above target at spraying

**Weather data:**

mobile meteorological station ATC
wind direction
wind speed in 0,5m - 2,0m - 4,0m above target
humidity / temperature

| **Weather station aligned in 90° angle to zero line (direction North 360°)** | | | | | | | | |
|---|---|---|---|---|---|---|---|---|
| | | | | | | | | |
| | | **Weather station in 2m height** | | | | | | |
| Time | Deviation wind direction in +/- ° from zero line | Wind speed m/sec | Temp. °C | Relative humidity % | Dew point °C | Air pressure hPa | Wind speed 60cm m/sec. | Wind speed 5m m/sec. |
| **Run** 1: | | | | | | | | |
| **Average:** | **-11,7** | **4,2** | **7,5** | **60,3** | **0,3** | **1004,2** | **3,1** | **4,8** |
| | | | | | | | | |
| **Run 2**: | | | | | | | | |
| **Average:** | **-32,7** | **4,9** | **7,4** | **60,1** | **0,1** | **1004,2** | **3,6** | **5,8** |
| | | | | | | | | |
| **Run 3:** | | | | | | | | |
| **Average:** | **-27,2** | **4,5** | **7,4** | **59,2** | **-0,1** | **1004,0** | **3,7** | **5,1** |

**Sampler:**

Petri dishes
distances 3m - 5m - 10m and 20m
number of dishes per distance point = 20
distance of dishes "in row" 0,5m

**Procedure:**

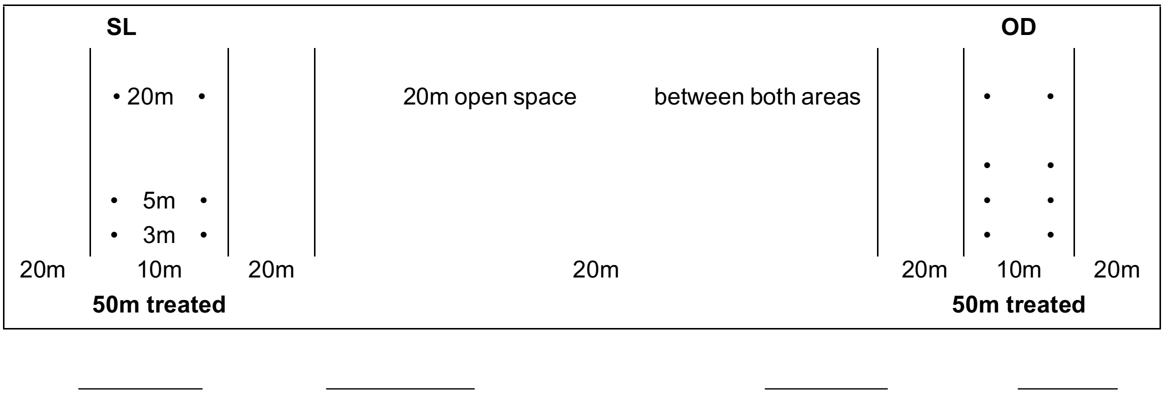


**3 x** 50m length x 2,5m width = total area have to be treated 125$m^2$

- both formulations will be treated at the same time

- three replicates will be sprayed on the same area

**Field:** grassland

**Results:**

| | Drift value | |
|---|---|---|
| Distance | OD | SL |
| m | g/ha | g/ha |
| 3 | 8,32 | 21,93 |
| 5 | 2,84 | 7,76 |
| 10 | 1,10 | 1,53 |
| 20 | 0,72 | 0,85 |

The data show that the use of an oil based suspension concentrate (OD) according to the invention containing the components a) to d) as defined in claim 1 leads to a strong reduction in drift of the spray liquid containing the oil-based suspension concentrate during spray application compared with the corresponding SL formulation (SL = soluble concentrate) wherein no vegetable or mineral or paraffin oil is present and which, thus, can not be used according to the invention.

## Claims

**1.** Use of oil based suspension concentrates containing

a) 5 - 30 wt.-% of at least one agrochemical active compound which is solid at room temperature, based on the weight of the suspension concentrate, wherein the at least one agrochemical active compound a) is selected from the group of neonicotinyls or ketoenols,
b) 10 - 55 wt.-% of at least one penetration enhancer, based on the weight of the suspension concentrate,
c) 15 - 55 wt.-% of at least one vegetable oil or mineral oil or paraffin oil, based on the weight of the suspension concentrate,
d) 2.5 - 30 wt.-% of at least one non-ionic surfactant or dispersing agent and / or at least one anionic surfactant

or dispersing agent, based on the weight of the suspension concentrate, and
e) optionally 0 - 25 wt.-% of one or more other additives

for the reduction of the drift of a spray liquid obtained by diluting the oil based suspension concentrate with water during spray application.

**2.** Use according to claim 1, wherein the spray liquid contains at least 0.000001 - 10 wt.-%, based on the weight of the spray liquid, of the oil-based suspension concentrates.

**3.** Use according to claim 1, wherein the oil-based suspension concentrates do not contain thickeners.

**4.** Use according to claim 1, wherein the at least one agrochemical active compound a) is selected from the group consisting of imidacloprid and thiacloprid and spirotetramat.

## Patentansprüche

**1.** Verwendung von ölbasierten Suspensionskonzentraten, die

a) 5 - 30 Gew.-% an mindestens einem agrarchemischen Wirkstoff, der bei Raumtemperatur fest ist, bezogen auf das Gewicht des Suspensionskonzentrats, wobei der mindestens eine agrarchemische Wirkstoff a) aus der Gruppe der Neonicotinyle oder Ketoenole ausgewählt ist,
b) 10 - 55 Gew.-% an mindestens einem Penetrationsförderer, bezogen auf das Gewicht des Suspensionskonzentrats,
c) 15 - 55 Gew.-% an mindestens einem Pflanzenöl oder Mineralöl oder Paraffinöl, bezogen auf das Gewicht des Suspensionskonzentrats,
d) 2,5 - 30 Gew.-% an mindestens einem nichtionischen Tensid oder Dispergiermittel und/oder mindestens einem anionischen Tensid oder Dispergiermittel, bezogen auf das Gewicht des Suspensionskonzentrats, und
e) optional 0 - 25 Gew.-% an einem oder mehreren anderen Zusatzstoffen

enthalten, zum Vermindern der Drift einer durch Verdünnen des ölbasierten Suspensionskonzentrats mit Wasser während der Spritzapplikation erhaltenen Spritzbrühe.

**2.** Verwendung nach Anspruch 1, wobei die Spritzbrühe mindestens 0,000001 - 10 Gew.-%, bezogen auf das Gewicht der Spritzbrühe, der ölbasierten Suspensionskonzentrate enthält.

**3.** Verwendung nach Anspruch 1, wobei die ölbasierten Suspensionskonzentrate keine Verdickungsmittel enthalten.

**4.** Verwendung nach Anspruch 1, wobei der mindestens ein agrarchemische Wirkstoff a) aus der Gruppe bestehend aus Imidacloprid und Thiaclorpid und Spirotetramat ausgewählt ist.

## Revendications

**1.** Utilisation de suspensions concentrées à base d’huile contenant

a) 5 à 30 % en poids d’au moins un composé actif agrochimique qui est solide à température ambiante, sur la base du poids de la suspension concentrée, le ou les composés actifs agrochimiques a) étant sélectionnés dans le groupe des néonicotinyles et des cétoénols,
b) 10 à 55 % en poids d’au moins un activateur de pénétration, sur la base du poids de la suspension concentrée,
c) 15 à 55 % en poids d’au moins une huile végétale ou huile minérale ou huile de paraffine, sur la base du poids de la suspension concentrée,
d) 2,5 à 30 % en poids d’au moins un tensioactif ou agent dispersant non ionique et/ou au moins un tensioactif ou agent dispersant anionique, sur la base du poids de la suspension concentrée, et
e) éventuellement 0 à 25 % en poids d’un ou plusieurs autres additifs

pour la réduction de la dispersion d’un liquide pulvérisé obtenu en diluant la suspension concentrée à base d’huile avec de l’eau lors de l’application par pulvérisation.

**2.** Utilisation selon la revendication 1, dans laquelle le liquide pulvérisé contient au moins 0,000001 à 10 % en poids, sur la base du poids du liquide pulvérisé, des suspensions concentrées à base d'huile.

**3.** Utilisation selon la revendication 1, dans laquelle les suspensions concentrées à base d'huile ne contiennent pas d'épaississants.

**4.** Utilisation selon la revendication 1, dans laquelle le ou les composés actifs agrochimiques a) sont sélectionnés dans le groupe constitué de l'imidaclopride et du thiaclopride et du spirotétramate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 005824797 A
- CA 1084689 A
- WO 0026160 A
- US 006103793 A
- WO 0160877 A
- WO 2003000053 A
- WO 2005084441 A
- WO 2006111279 A
- WO 2008031512 A
- WO 2009106247 A
- US 6797673 B
- WO 9835553 A
- WO 0035278 A
- EP 0681865 A


### Non-patent literature cited in the description


- **M. DE SCHAMPHELEIRE et al.** Deposition of spray drift behind border structures. *Crop Protection,* 2009, vol. 28, 1061-1075
- The importance of droplet size in agricultural spraying. *A.J. Hewitt Atomization and Sprays,* 1997, vol. 7, 235-244
- Biological efficacy of herbicides and fungicides applied with low-drift and twin-fluid nozzles. *P.K.Jensen et al. Crop Protection,* 2001, vol. 20, 57-64
- **HERMANSKY C.G. ; KRAUSE G.F.** *Proc, ISAA 4th international conference,* 1997, 20-26
- **HEWITT A.J.** *Environmentalist,* 2008, vol. 28, 25-30
- **BUTLER ELLIS M.C. ; BRADLEY et al.** *Atom. And Sprays,* 1999, vol. 9, 385-397
- **SPANOGHE P. et al.** The influence of dynamic surface tension on atomization and retention of agrochemical active compounds. *Proc. 5th World surfactant congress, Cesio, Committee European des Agents de surface et leurs intermediares organiques,* 2000, vol. 2, 899-907
- **MILLER PCH ; HADFIELD DJ.** A simulation model of spray drift from hydraulic nozzles. *J. Agric. Eng. Res.,* 1989, vol. 42, 135-147